# EUROPEAN PATENT APPLICATION

(11) **EP 2 017 657 A2**
(43) Date of publication of application: **21.01.2009**
(21) Application number: 08386016.3
(22) Date of filing: 21.07.2008
(51) Int. Cl.: G02B 5/30, G03B 21/60, G02B 27/28

(54) **A circular polarizing screen for displays with a plane-polarized output emission**

(30) Priority: 19.07.2007 GR 20070100465
(71) Applicant: University of Patras, 26500 Rio, Patras (GR); Pallikarakis, Nikolas, 26504 Patras (GR); Valchinov, Emil, 26442 Patras (GR)
(72) Inventor: Pallikarakis, Nikolaos, 26504 Patras (GR); Valchinov, Emil, 26442 Patras (GR)

(57) **Abstract**

A circular polarizing screen comprised of a broad-band quarter-wave retardation plate (1) where the angle between the plate's fast axis (2) and the electric field vector (4) of the incident plane-polarized light of the TFT-LCD display is 45 degrees, thus transforming the output emission into a circularly polarized light (5) with equal amplitudes of vibration in all azimuths, which is a good approximation of non-polarized light.

The advantage of the invention is its simplicity and minimal brightness loss. Moreover, it is highly suitable for production in industrial scale as a built-in component of TFT-LCD displays.

## Description

The present invention relates to circular polarizing screen comprised of a quarter-wave (λ/4) retardation plate for displays with a plane-polarized output emission and TFT-LCD displays in particular.

The percentage of computer workers who experience visually related symptoms is generally reported to be from 70 to 75 percent. The most common vision and eye problems are: eyestrain, headaches, blurred vision, dry or irritated eyes, double vision etc. Lately there is a gradual change away from the bulky CRT monitors (TV or PC) towards flat panel TFT-LCD displays. However, due to the technology used, the light emitted from TFT-LCD displays, unlike the natural light, is plane-polarized. There are suspicions that prolonged looking at plane-polarized light might contribute to the vision problems, which is often the case when working with TFT-LCD displays.

The object of this invention is to provide a simple way to transform the plane-polarized output emission of the TFT-LCD displays into a non-polarized light.

In view of this objective, the subject of the invention is a transparent screen comprised of a broad-band quarter-wave retardation plate, positioned with its fast axis at 45 degrees to the electric field vector of the plane-polarized output emission of a TFT-LCD display thus transforming it into a circularly polarized light with equal amplitudes of vibration in all azimuths, which is a good approximation of non-polarized light.

The advantage of the invention is its simplicity and minimal brightness loss. Moreover, it is highly suitable for production in industrial scale as a build-in component of TFT-LCD displays.

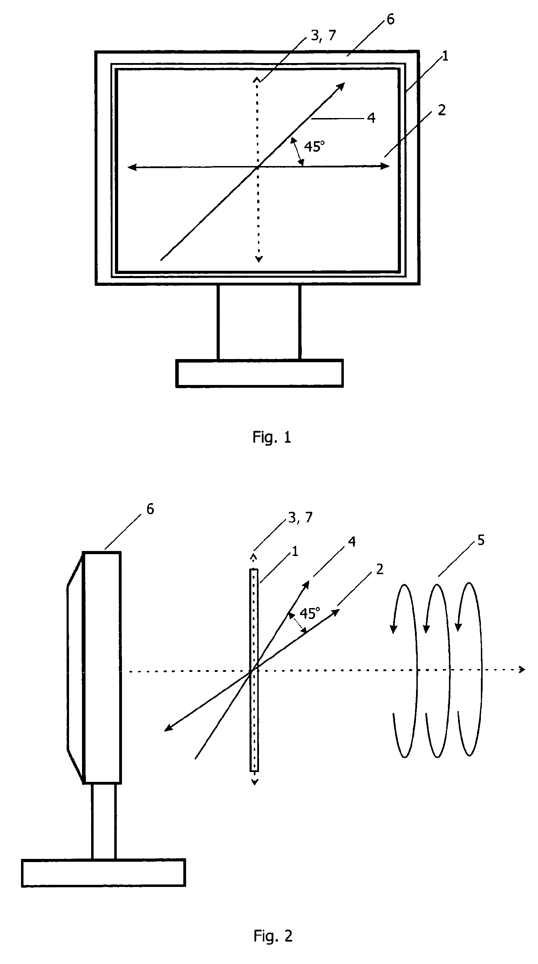

The invention is further described hereinafter with reference to one of its preferred embodiments shown in the accompanying drawings, in which Fig.1 is a front view and Fig. 2 is a side view. The quarter-wave retardation plate (1) is a dichroic sheet-type polarizer with its optic axis (7) lying in a plane parallel to the face of the plate. When placed in front of the TFT-LCD display (6), it resolves the incident plane-polarized light into two polarized components, ordinary and extraordinary ray, traveling along the same path through the plate (1) but vibrating at right angles to each other. The ordinary ray vibrates in a direction perpendicular to the optic axis (7), while the extraordinary ray vibrates in a direction parallel to the optic axis (7) and travels more slowly than the ordinary ray. The fast axis designated by the double arrow (2), is defined as the direction in which the faster-moving ordinary ray vibrates perpendicularly to the optic axis (7), while the slow axis designated by the dotted double arrow (3), is defined as the direction in which the slower-moving extraordinary ray vibrates coinciding with the optic axis (7).

As seen from Fig. 1, the angle between the fast axis (2) of the quarter-wave retardation plate (1) and the electric field vector (4) of the incident plane-polarized light of the TFT-LCD display is 45 degrees. In this case the difference in velocities gives rise to a phase difference of π/2 or quarter wavelength (λ/4) between the two rays, where the extraordinary ray lags the ordinary ray.

After the quarter-wave retardation plate (1), the two rays recombine to form a single emerging beam of a circular polarization as designated by the arrowed curves (5). The circularly polarized light has equal amplitudes of vibration in all azimuths and is a good approximation of non-polarized light.

## Claims

1. A circular polarizing screen comprised of a broad-band quarter-wave retardation plate (1) to be used with displays with a plane-polarized output emission.

2. A screen in accordance with claim 1, **characterized by** the fact that the angle between the fast axis (2) of the quarter-wave retardation plate (1) and the electric field vector (4) of the incident plane-polarized light is 45 degrees.
